# EUROPEAN PATENT APPLICATION

(11) **EP 3 629 539 A1**
(43) Date of publication of application: **01.04.2020**
(21) Application number: 18197482.5
(22) Date of filing: 28.09.2018
(51) Int. Cl.: H04L 29/06, H04L 1/18

(54) **AUDIO DATA BUFFERING FOR LOW LATENCY WIRELESS COMMUNICATION**

(71) Applicant: RTX A/S, 9400 Nørresundby (DK)
(72) Inventor: Petersen, Jens Toftgaard, 9230 Svenstrup J (DK); Mortensen, Flemming, 9000 Aalborg (DK)
(74) Representative: Plougmann Vingtoft a/s

(57) **Abstract**

A method for wireless RF transmission of short audio data blocks, e.g. 0.5 ms to 2 ms blocks, with low latency. The method involves a fixed part (FP) serving as synchronization master, and one or more portable parts (PP) being synchronization slaves in a time division scheme with fixed transmission intervals, and with a fixed and limited payload capacity of the RF transmission channel, such as 1.5-3 times the capacity required to transmit the audio data blocks in real-time. Short length transmission and receiving queues (TQ, RQ), e.g. having each 2-8 spaces for audio data blocks, for the audio data blocks are used to allow retransmission of blocks in response to a missing acknowledge response from the portable part (PP). The queuing is operated so as to result in a fixed latency determined e.g. by the transmission and receiving queue (TQ, RQ) lengths. A two-way audio scheme can be implemented following the same principle and utilizing the same RF transmission principles. The method provides a robust and low latency wireless audio interface suitable for dedicated audio devices and/or combined audio and Human Interface Devices (HIDs), e.g. for gaming equipment.

## Description

### FIELD OF THE INVENTION

The present invention relates to the field of wireless transmission, especially the field of wireless radio transmission of digital audio data with low latency (delay) and still with a high immunity against audio data loss due to radio interference and limited radio coverage. Specifically, the invention relates to methods for buffering of audio data blocks to provide a low latency and still minimizing the risk for audio artifacts due to wireless packet loss. Thus, the invention is advantageous for microphones, musical instruments, and gaming equipment such as keyboard, mouse, game controller, microphone, headphone and headset, or for video applications e.g. as part of Virtual Reality devices.

### BACKGROUND OF THE INVENTION

For wireless transmission of audio data, radio interference problems are especially pronounced for radio transmission in the license free ISM spectrum, i.e. in the 2.4 GHz and 5.8 GHz bands. In these bands many different wireless technologies operate in uncoordinated manners. It is unavoidable that wireless transmitted data can get interfered and lost, and thus also audio data can be lost and consequently can lead to audible artifacts. A high immunity against audible artifacts can be traded for an increased latency and vice versa.

Current practice for handling interference and wireless packet loss are different depending of technology and application. For example, in Bluetooth music streaming applications audio data packets are buffered in large buffers containing several hundreds of milliseconds (ms) of audio. In case of wireless packet loss audio data packets may be retransmitted when possible. For applications like music streaming it is not a problem to introduce latency of the size of +100 ms, since the streaming is one-way. E.g. solutions can be a long audio buffer on the receiver side, thus allowing for on-demand retransmission.

However, for wireless communication applications such as cordless and cellular telephony, a rather low latency is required, and here the effect of packet losses is often masqued by different packet loss concealment (PLC) methods depending on the used voice encoding algorithms. Other methods are based on redundant transmission of the same audio packet on different frequencies (dual slot diversity), where the same audio packet is always transmitted twice (or more).

For applications such as live stage performance involving wireless microphones and loudspeakers, a very low audio data latency and robustness against interference (to avoid audio drop-outs or other audible artifacts) are crucial requirements. The same applies to real-time bidirectional audio applications like headsets which typically require audio data communications with minimum latency for optimal function.

### SUMMARY OF THE INVENTION

Thus, according to the above description, it is an object of the present invention to provide a robust transmission method that minimizes the risk for audio artifacts, but still keeps the latency low enough for demanding applications such as live performances etc.

In a first aspect, the invention provides a method for transmission of a digital audio signal divided into digital audio data blocks of a fixed length, e.g. 0.5-5.0 ms, between a fixed part (FP) being a timing master and one or more portable parts (PP) being timing slaves on a wireless Radio Frequency (RF) transmission channel according to a time division multiplexing or time division duplexing scheme with a fixed transmission time interval, e.g. 1 ms, wherein a raw payload bandwidth of the wireless RF transmission channel is a fixed factor larger, e.g. 1.5-3.0 times larger, than a bandwidth required to transmit the audio data blocks, wherein the wireless RF transmission comprises a fixed wireless frame length, each wireless frame containing one or more time slots, the method comprising:
1) receiving an audio data block at the FP,
2) queuing the audio data block at an empty space in a fixed length First-In-First-Out (FIFO) type transmitter queue (TQ) having a plurality, such as 2-8, of spaces for audio data blocks,
3) transmitting a wireless data packet containing an audio data block from an output end of the TQ from the FP to the PP on the wireless RF transmission channel,
4) receiving the wireless data packet by the PP,
5) queuing the audio data block received in the wireless data packet at an empty space in an input end of a fixed length FIFO type receiver queue RQ having a plurality, e.g. 2-8, of spaces for audio data blocks,
6) transmitting an acknowledgement message from the PP to the FP on the RF transmission channel in response to the received audio data block, and
7) outputting an audio data block from an output end of the RQ,
wherein the steps 1)-7) are performed in time synchronization so as to provide a fixed latency between step 1) and step 7), i.e. for an audio data block to proceed from step 1) to step 7),
wherein the FP is arranged to retransmit an audio data block from the TQ, in a subsequent wireless data packet, preferably in the next Time Division frame, in case no acknowledgement message has been received for transmission of that audio data block, and
wherein an audio data block is deleted from the TQ in response to the FP receiving the acknowledgement message for successful transmission of that audio data block.

Such method is advantageous to stream an audio signal over a wireless RF channel with limited capacity, e.g. in the ISM band, and where latency and robustness requirements are high. E.g. the method is suitable for stage microphones or loudspeakers, gaming headsets etc., where a fixed and low latency is important and using an RF channel with a limited capacity. Especially, using a short RQ and an equally short TQ of a length of such as 2-8 blocks in combination with short audio data blocks of such as 0.5-2 ms, the latency can be very low. Due to the timing synchronization in the handling of audio data blocks from input to the FP to output from the PP, via the RF transmission channel, the delay has a fixed value determined by the length of the audio data blocks and the lengths of the RQ and TQ. Still, the transmission is robust to packet losses due to the use of acknowledgement messages and retransmission of lost audio data blocks from the TQ, and even with a very limited raw payload capacity of the RF transmission channel. The higher capacity, the higher robustness can be obtained. However, with a factor of such as 1.5-3 times the capacity required for transmission of the audio data blocks, a high robustness can be achieved and still with a latency lower than e.g. 10 ms.

The high immunity against interference allows application within high quality or ultra high quality audio.

The invention is based on the insight of the inventors that the application of a time division multiplexing or duplexing scheme in combination with short audio data blocks allow for a low (and fixed) latency transmission and at the same time, even with a short length TQ and RQ, a high robustness can be achieved even in combination with a limited extra transmission capacity of the RF channel available, i.e. even less than 3 times the payload capacity required to merely transmit the audio data blocks, preferably 2 times.

The practical implementation of a TQ and an RQ are known by the skilled person from other wireless transmission systems.

The method is further advantageous for applications where both audio and Human Interface Device (HID) data are preferably transmitted along with audio data. This is the case e.g. in wireless gaming equipment involving headsets as well as various gaming controllers. Such HID data must be transferred with the lowest possible latency, e.g. joystick position data and the like from a gaming controller, e.g. for on-line gaming. By nature, the subjective effect of lost HID data is not as significant as loss of audio data, and thus in some applications it may be preferred to transfer HID data with lowest possible latency and allow erroneous HID data to be discarded. According to the method, a transmitted wireless data packet can contain audio data blocks as well as HID data blocks. Preferably, in contrast to the audio data blocks, the HID data blocks are un-queued, and thus not possible to retransmit in case of transmission errors. Rather, the lack of queuing provides an ultra low latency and a lost data block is typically not critical for HID data, in contrast to audio data.

Further, the method is applicable also for full duplex audio data transfer between FP and PP(s), namely where the roles of the FP and PP are reversed compared to the definition of the first aspect.

The below phrases will be used and are therefore explained:
- Communication direction from FP to PP is denoted downlink.
- Communication direction from PP to FP is denoted uplink.
- Time Division Multiple Access (TDMA).
- Human Interface Device (HID), e.g. keyboard, controller such as joystick, mouse etc.
- Cyclic Redundancy Check (CRC) for error check and possible correction of data.
- A single radio event e.g. transmit or receive is denoted a slot or time slot.
- Two slots on separate frequencies carrying the same application payload can be denoted a dual slot.
- A repeated sequence of downlink and uplink slots, including slot(s) for interference scanning (TDMA frame) is denoted a wireless frame.
- A channel where data are retransmitted until acknowledged by the receiver is denoted a reliable channel. Sequence numbering prevents duplicated delivery of same data to the application.
- Interval between transmission of two different audio or HID data blocks is denoted update interval.
- A fixed part (FP) is the master of the wireless Time Division (TD) frame timing. It may in this context be a dongle attached to a PC or gaming console, or it may be integrated into e.g. a gaming console etc.
- A Portable part (PP) is synchronized to the TD frame timing of the FP. It may in this context be integrated into a wireless device such as a headset, keyboard, mouse, remote controller, or the like, or it may be a dedicated wireless receiver device with an audio output for digital or analog audio output.

In the following preferred embodiments and features will be described.

The invention is applicable with wireless RF transmitter and receiver hardware including electronics and antennas etc. as known in the art. Thus, in the description of the present invention, it is to be understood to be applicable with any such known hardware to implement the FP and PP(s). The invention is applicable in general independent of the selected RF bearer. Especially, the RF bearer frequency can be selected to be within 1 GHz to 200 GHz, e.g. within 2-5 GHz. E.g. a license free ISM band may be selected.

The audio data blocks may be formed by any digital representation of an audio signal. E.g. digital data indicative of compressed or non-compressed audio sampled at a rate of such as 8, 16, 24, 32, 44.1, 48, 96 or 192 kHz and with any amplitude resolution, e.g. of such as 8, 10, 12, 16, 20 or 24 bit. Especially, the audio data blocks may represent an ADPCM encoded audio signal.

The fixed length of the TQ is preferably 2-8, such as 2-4, e.g. 3, 4 or 5 may be chosen. The fixed length of the RQ is also preferably, 2-8, and especially, the TQ and the RQ may have equal lengths, specifically both TQ and RQ may have a length of 3, 4 or 5. In general, the TQ and RQ length adds to the total delay, but the possibility of avoiding audible artifacts in case of packet loss increases with increased TQ and RQ length.

The fixed length of the audio data blocks may preferably be selected to be within 0.2 ms to 8 ms, especially such as 0.5 ms to 4.0 ms. Such short blocks allow for a very low total latency.

The fixed length of the wireless frame is preferably selected to be within 0.2 ms to 20 ms, such as 0.2 ms to 10 ms, such as a length of 0.2 ms to 5 ms, such as 0.5 ms to 3 ms.

In a specific set of embodiments,
- the fixed length of the TQ is equal to the length of the RQ and is within 2-8,
   the fixed length of the audio data blocks is selected to be within 0.2 ms to 8 ms, such as 0.5 ms to 4.0 ms,
- the fixed length of the wireless frame is selected to be within 0.2 ms to 20 ms, such as a length of 0.2 ms to 20 ms, and
- the fixed transmission time interval is selected to be within 0.2 ms to 10 ms, such as 0.5 ms to 5 ms.

In preferred embodiments, a ratio between required audio data bandwidth and wireless payload transmission bandwidth is 1:N, where N is an integer number larger than 1. In such configuration the size of audio data blocks entered to the transmission queue and the size of transmitted audio data blocks will be the same. A preferred value is N=2, which enables a specific an error handling method in the transmitter side. For N=2, and when the TQ runs full on the FP side, the oldest audio data block in the queue will effectively be transmitted twice, which exactly corresponds to a traditional dualslot transmission method. For configurations where N is larger than 1, but is not an integer value, the transmitted audio data blocks have a different size than audio data blocks entered in to the queue. In such configurations the partly content of two audio data blocks have to be concatenated to form data packet of proper size for transmission. On the PP side, reverse processing must be performed.

The method may comprise
- receiving HID data at the PP,
- transmitting a HID data block in a wireless data packet also containing an audio data block on the wireless RF transmission channel from PP to FP, and
- outputting a HID data block received at the FP.

Especially, said HID data block is preferably transmitted un-queued at the PP and output un-queued at the FP. Thus, in spite the same RF link is used, the audio data and the HID data can be treated separately, where audio data blocks are queued for possible retransmission, while HID data blocks are un-queued.

The method may comprise retransmitting one queued audio data block from the FP a plurality of times. Possible strategies or algorithms for handling retransmission in response to e.g. the available transmission capacity in relation to the number of queued audio data blocks in the TQ and RQ will be described in more details later.

Preferably, a transmission sequence number is attached to the audio data blocks transmitted over the wireless interface. This transmission sequence number is incremented for each transmission of new audio data block. In case of retransmission of audio data blocks, the transmission sequence number remains unchanged. This sequence number enables the receiver to distinguish between reception of new audio data blocks and retransmission of already received audio data blocks. Received retransmitted audio data blocks are discarded in the receiver. The transmission sequence number is usually transmitted in a wireless protocol control data field.

The receiver side preferably acknowledges the received audio data blocks by transmitting an acknowledgement reply containing the sequence number of the last successfully received audio data block. This information is sent from the receiver side in the wireless protocol control data field and usually named receiver sequence number. The value of the receiver sequence number may alternatively be coded as the value of the next sequence number to be received. At the transmitter side, when receiving the receiver sequence number, the transmitter may compare the transmitter sequence number and the receiver sequence number and determine if the audio block transmission has been acknowledged by the receiver. Because the transmitter side does only transmit one new audio data block, and potentially retransmit the same audio data block until acknowledgement is received from the receiver side, the size of the transmitter sequence number and receiver sequence number can be reduced to a single bit.

The method preferably comprises duplex audio data transmission between the fixed part (FP) and the portable part (PP). Especially, the PP may be arranged to transmit audio data blocks to the FP on said RF transmission channel. Especially, this may be interesting for a PP in the form of a wireless headset applications, which have both microphone and speaker. Preferably, there are then separate queues for the two transmission directions and the audio data block queuing method operates independently for the two directions. In such configuration, the wireless protocol control field contains both transmitter sequence number and receiver sequence number. It is to be understood that the same audio data block transmission scheme can be used for PP to FP audio transmission as described for the FP to PP audio transmission.

Especially, the wireless frame may comprise at least one time slot for downlink data, and one or more time slots for uplink data.

Each time slot may comprise a Cyclic Redundancy Check (CRC) error check field. Especially, seeding of the CRC derived from system identity can be used for discriminating packets between multiple systems.

In advantageous embodiments of the method, dualslot transmission is provided. Especially, this may be in the form of RF transmission of one audio data block on two RF bearers with different frequencies in one wireless frame, i.e. providing a payload capacity of a factor of 2 times what is required. If retransmission of an audio data block is needed, one wireless frame may comprise data from a new audio data block as well as the audio data block to be retransmitted. In case there is no need for retransmission, the new audio data block can simply be transmitted on both RF bearers, i.e. 100% redundant transmission. This method allows retransmission of data block several times. Especially, the two RF bearers may be selected based on measures of actual interference levels, thus it is possible to select two frequencies among a set of supported RF channels, with the minimal RF interference. Thus, preferably the two duplex bearer frequencies dynamically allocated and reallocated in order avoid or minimize interference and to cause minimum interference to other users of the same frequency band. Thus, the method involves both time diversity and frequency diversity by the transmission of the same data in two different timeslots in each wireless frame and on two different channels. A selection algorithm preferably serves to determine first and second frequencies F1, F2 which are indicated as the RF bearers having the lowest measure of interference level, among all supported channels. To further increase communication range and transmission reliability, antenna diversity can be used, i.e. using two or more antennas on both FP and PP for transmitting and receiving, which adds space diversity additionally.

In a second aspect, the invention provides a wireless RF transmitter comprising at least one RF transmitter circuit connected to an antenna, and being arranged to operate as the FP according to the method of the first aspect.

In a third aspect, the invention provides a wireless RF receiver comprising at least one RF receiver circuit connected to an antenna, and being arranged to operate as the portable part PP according to the method according to the first aspect.

It is to be understood that the required RF circuit, antenna and programming required to implement a RF transmitter and RF receiver, as well as handling of time synchronization between FP and PP, will be known by the skilled person based on the present description of the inventive method.

In a fourth aspect, the invention provides a system comprising at least one of: the wireless RF transmitter according to the second aspect, and one or more wireless RF receivers according to the third aspect. Especially, the system may be one of: a wireless headset, a wireless mouse, a wireless gaming controller, a wireless keyboard, a wireless microphone, a wireless loudspeaker, and a wireless intercom system, a video system, and a Virtual Reality system.

Audio devices may require fixed bandwidth and fixed latency, whereas some HID devices may have different requirements to bandwidth and latency. The requirements to downlink and uplink may be different. However, it is to be understood that all can be complied with in embodiments of the invention.

The method, and the RF transmitter and receiver devices arranged to operate according to the method may form separate dedicated devices, or these components may be integrated partly or fully into audio devices.

In a further aspect, the invention provides a computer readable program product comprising an executable code part for an FP device and an executable code part for a PP device, which when executed on respective processors in the FP device and the PP device, cause the FP device and the PP device in cooperation to perform the method according to the first aspect.

It is appreciated that the same advantages and embodiments described for the first aspect apply as well the further mentioned aspects. Further, it is appreciated that the described embodiments can be intermixed in any way between all the mentioned aspects.

### BRIEF DESCRIPTION OF THE FIGURES

The invention will now be described in more detail with regard to the accompanying figures of which
FIG. 1 illustrates a simple block diagram of a system embodiment with a fixed part (FP) and a portable part (PP) transmitting a wireless data packet including an audio data block and with acknowledgement over a wireless RF channel,
FIG. 2 illustrates steps of a method embodiment,
FIG. 3 illustrates a block diagram of a system embodiment with an FP and a PP arranged for full duplex audio transmission,
FIGs. 4-7 illustrate various strategies for handling the TQ and RQ at different situations of retransmissions in case of packet loss, and
FIGs. 8a and 8b illustrate examples of wireless data packet formats in case of audio data only, and in case of audio data combined with HID data.

The figures illustrate specific ways of implementing the present invention and are not to be construed as being limiting to other possible embodiments falling within the scope of the attached claim set.

### DETAILED DESCRIPTION OF THE INVENTION

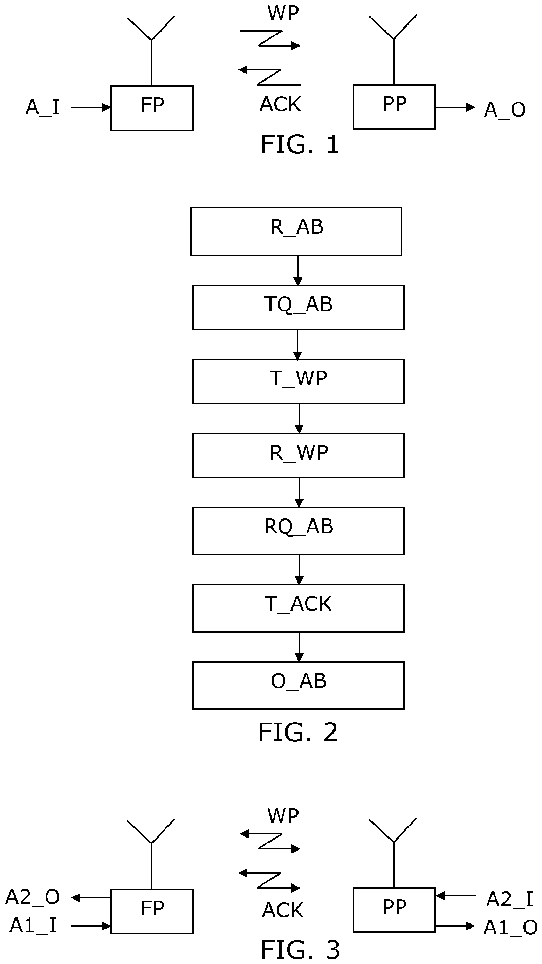

Fig. 1 shows a block diagram illustrating the basic setup behind the invention, namely a fixed part FP and a portable part PP communicating, here shown as duplex communication, by means of a wireless electromagnetic RF signal on RF bearer, optionally two RF bearers with different frequencies. Thus, basically the FP and PP both have RF antennas and RF circuits for transmitting and receiving RF signals. The FP may be implemented as a dongle for a computer, or being an integrated part of e.g. a gaming console or other dedicated device.

The FP receives an input audio signal A_I, and transmits wireless data packets WP each with an audio data block on the RF bearer, and the wireless data packets WP are received by the PP which unpacks the audio data blocks to arrive at the original audio signal A_O. The PP transmit in response to a successfully received wireless data packet an acknowledgement message ACK back to the FP, which can then retransmit a lost audio data block in the next wireless data packet.

In some embodiments, the FP performs a scanning and preferably performs own measurement as well as collects Received Signal Strength Indication data from the PP for the supported channels, so as to dynamically select the two frequencies F1, F2 according to a predetermined algorithm for finding the frequencies F1, F2 with the minimal possible RF interference from other RF traffic in the RF band covering the supported channels, e.g. an ISM band.

By using short audio data blocks, and short buffers or queues at the FP and the PP side, a low latency can be obtained, and with a small extra capacity of the RF transmission channel, a high reliability can be obtained, since it is possible to retransmit lost wireless data packets WP. Using an RF channel with a fixed capacity of a factor of 2 of the payload capacity required for transmission of the audio data blocks, and with audio data block lengths of such as 2 ms, and with audio data block buffer or queue length at the FP and the PP side with a length of 4, a good compromize between low latency and high immunity against packet losses has been found. The low latency and high reliability may e.g. be appreciated for products such as gaming devices with audio capabilities.

In FIG. 1 only one PP is shown, however, it is to be understood that embodiments of the invention support broadcasting to a plurality of PPs, i.e. a point to multipoint transmission.

In FIG. 1 only one way audio is shown, but in case e.g. of a headset, it is to be understood that the method of the invention supports embodiments where audio data can be transmitted both uplink and downlink.

FIG. 2 illustrates steps of a preferred method embodiment. The method for wireless RF transmission of a digital signal in data packets between a FP being a timing master and one or more PP being timing slaves. The FP and PP are setup in a time division multiplexing or duplexing scheme, i.e. setup to transmit a wireless frame with a fixed time interval of e.g. 1 ms, on an RF channel such as in the 2.4 GHz band with a capacity of e.g. 2 times the payload capacity required for transmission of the audio data blocks. The structure of the wireless frame for wireless transmission is fixed, and the fixed length can be such as 2 ms.

The following method steps are understood to be continuously performed in each time interval in order to stream of audio. First step is receiving R_AB a digital audio data block at the FP, e.g. directly form of an output of an analog-to-digital converter from an audio device, e.g. a gaming headset, or from an output from a processor having performed a pre-processing, e.g. involving a compression, encryption or the like, on the audio signal. The audio data blocks have a fixed predetermined length, such as 2 ms.

Next step is queuing TQ_AB the audio data block at an empty space in a fixed length FIFO type TQ having 4 spaces for audio data blocks.

Next step is transmitting T_WP a wireless data packet containing an audio data block from an output end of the TQ from the fixed part FP to the portable part PP on the wireless RF transmission channel.

At the PP end, the wireless data packet is received R_WP, and the audio data block therein is queued RQ_AB at an empty space in an input end of a fixed length FIFO type RQ having 4 spaces for audio data blocks. In response to the received audio data block, the PP transmits T_ACK an acknowledgement message to the FP on the RF transmission channel. Further, the PP outputs O_AB an audio data block from an output end of the receiver queue RQ, and thus the resulting audio data block has been successfully transmitted, and e.g. the audio data therein can be applied to a digital-to-analog converter, e.g. after being decoded or decrypted, if required, e.g. to produce an audio signal to be played by a loudspeaker or a headphone or the like.

Some embodiment involve duplex transmission between the FP and the PP. This may be in the form of 2-way audio data transfer, and in addition it is possible as well to provide 1- or 2-way HID data transfer.

In a special embodiment, dualslot diversity is provided in the form of transmission of two data packet in one wireless frame, on two different RF transmission bearer frequencies. Such embodiment may especially involve sequentially scanning such as 10-100 supported channels within a limited frequency band, such as a limited band around 2.4 GHz, wherein the channels closely spaced in frequency, e.g. space by such as spaced by 1-2 MHz. The scanning serves to determine two bearer frequencies for the RF transmission, where the scanning reveals the least RF interference level. A control algorithm can be provided to determine which two data packets to transmit in a time window. Such control algorithm may have inputs regarding number of audio data blocks in the TQ and RQ, as well as other parameters.

FIG. 3 shows an embodiment similar to FIG. 1, except that the method includes duplex audio transmission between the FP and PP. As in FIG 1, the FP can transmit an audio input A1_I to the PP in a wireless data packet, and the PP can accordingly output a representation of the audio signal A1_O. In this embodiment, the PP preferably utilizes the same method of the first aspect of the invention to transmit an audio input A2_I in a wireless data packet via the RF transmission channel to the FP which can then output audio signal A2_O accordingly. Such duplex audio connection can be used e.g. if the PP is a wireless headset comprising a microphone and a loudspeaker to capture audio signal A2_I, and to generate audio in response to audio signal A1_O, respectively.

In the following, a further explanation of preferred embodiments will be described, i.e. related to the queue or buffer of audio data blocks on the transmitter side, the transmitter queue TQ, and the queue or buffer of audio data blocks on the receiver side, the receiver queue RQ. The TQ and RQ are both FIFO types.

On the transmitter side, audio data blocks are entered in to the TQ at a fixed rate. On the receiver side the audio data blocks are taken out of the RQ at a fixed rate. In a transmitting device, such as for example a wireless microphone, the analog signal from a microphone transducer is analog-to-digital converted. The digital audio data, e.g. with a resolution of 8 to 32 bit, is compressed by an audio compression algorithm, typically implemented in an Digital Signal Processor. (DSP). The output data of the audio compression are collected to fixed size audio data blocks. The audio data blocks are entered to the TQ. At next occurrence of timeslot for wireless transmission, the oldest audio data block from the TQ is transmitted. If the TQ is empty when wireless transmission timeslot occurs, the wireless transmitter can either omit transmission or it can transmit an empty data packet. Usually, the wireless transmitter also transmits a wireless protocol control field, which may indicate empty data packet. When the transmitter side receives acknowledgement from the receiver side, the oldest audio data block is deleted from the TQ. If no acknowledgement is received, the audio data block will stay on the TQ and be retransmitted at next occurrence of timeslot for wireless transmission.

At the receiving device, such as for example a loudspeaker, when the wireless receiver receives an audio data block, it is entered to RQ. The receiver side replies with an acknowledgement to the transmitter side. If the RQ is already full, no acknowledgement is sent. At fixed time interval the oldest audio data block is removed from the RQ, and each data element in the block is feed to an audio de-compression algorithm, typically implemented in an DSP. The digital output data, which may have a resolution of 8 to 32 bit, may be digital-to-analog converted and outputted to a loudspeaker transducer.

The state of the TQ and RQ when no wireless transmission errors occur is a full RQ and an empty TQ. When wireless transmission errors occur, the RQ is not full, and the TQ is not empty. As long as the TQ does not run full and RQ does not run empty, there is a fixed latency from audio data input in the transmitter side to audio data output in the receiver side, even when retransmissions of wireless packets occur. Usually, the time for entry of an audio data block to TQ and the time for removal of audio data block from the RQ are aligned to the wireless transmission frames for achieving minimum overall system latency.

As the preferred state of the queues are a full RQ and an empty TQ, special handling is required during initialization of an audio transfer session. During such initialization phase, no audio data blocks are removed from the RQ until the RQ is completely full.

In the scenarios of server transmission error rate, which result in the empty RQ and full TQ, specific error handling procedures may be performed. When the TQ is full and new audio data blocks are ready to be entered to the TQ, the oldest audio data block is removed from the TQ, even though it has not been acknowledged from the receiver side. At the receiver side, when the RQ is empty, and an audio block is requested, the de-compression algorithm is informed about missing audio data and can perform packet loss concealment (PLC) to eliminate or at least reduce audible artifacts.

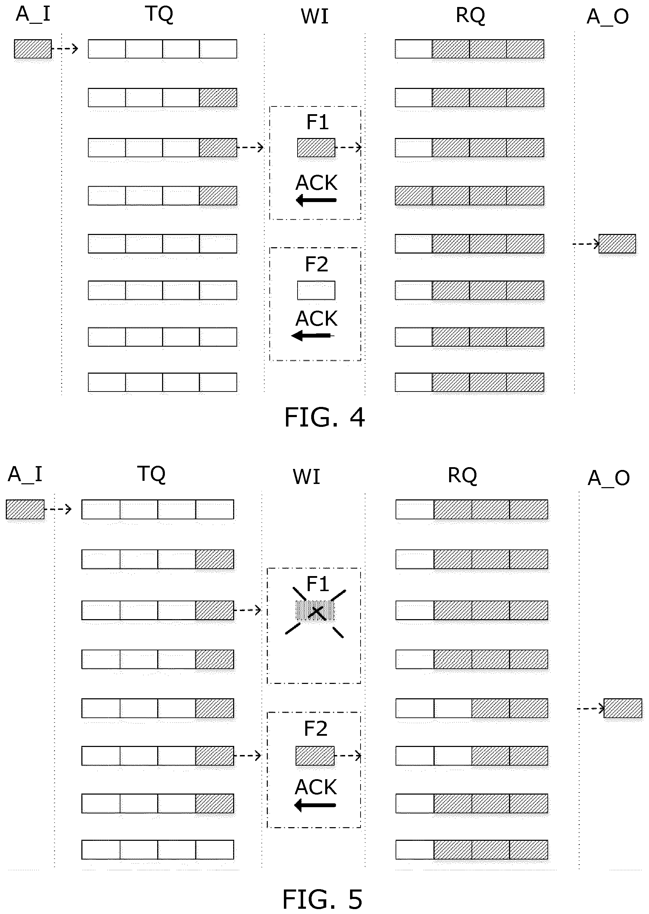

Following the above description of the preferred function of the TQ and RQ, FIGs. 4-7 illustrate various scenarios regarding decisions to be administered related to which audio data block(s) to transmit in a time window. This depends on the TQ on the FP side, and RQ status on the PP side, but still various solutions can be applied, depending on the given circumstances and performance demands. In FIGs. 4-7, audio data blocks are indicated with hatched boxes, while white boxes indicate empty spaces. The illustrations indicate a sequence of time frames starting from the top. To the left the FP is indicated with audio input A_I and TQ. In the middle, the wireless interface WI is indicated, and to the right the PP is indicated, including RQ and audio output A_O. The example in FIGs. 4-7 specifically shows the scenario for a TQ and an RQ with a length of 4, and with two transmissions per wireless frame (N=2). FIGs. 4-6 indicate acknowledgement messages ACK from the PP, and they indicate the wireless RF transmission on two different bearer frequencies F1, F2 in one wireless frame.

FIG. 4 illustrates the normal sequence of audio queue flow during a wireless frame when there are no transmission errors in the wireless transmission. The preferred status is an empty transmit queue and full receive queue.

FIG. 5 illustrates audio que flow when there is one transmission error in the wireless transmission WI and the audio block is retransmitted once.

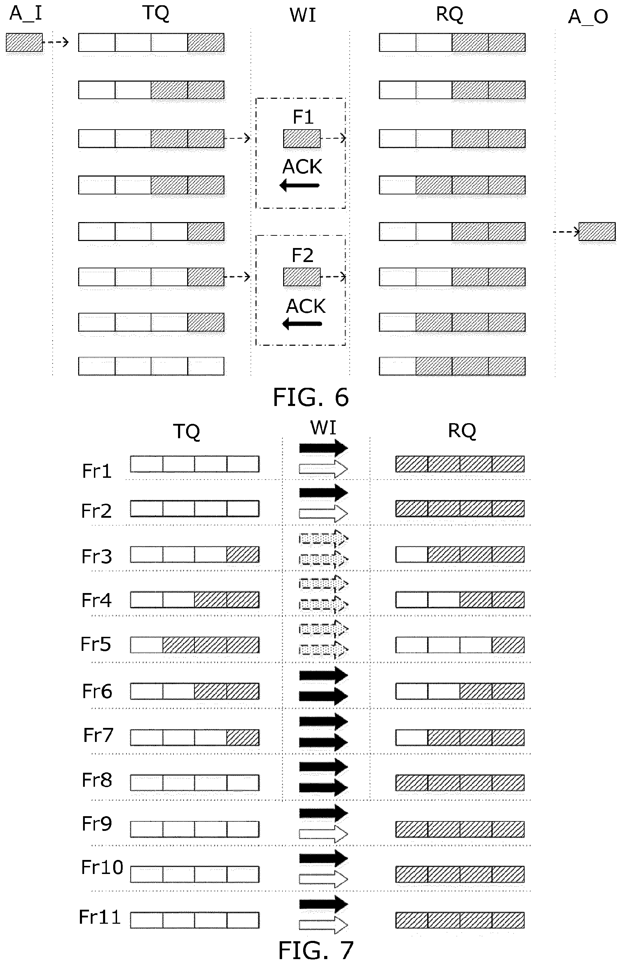

FIG. 6 illustrates audio queue flow for the case when initial status is a non-empty TQ and a partly full receive queue RQ, and when the second wireless transmission WI brings the queues back to the preferred status, i.e. an empty TQ and a full RQ.

FIG. 7 illustrates queue status and packet transmissions for the case with the maximum number of sequential wireless transmission errors that can be handled without effecting the audio transfer. The shaded elements of TQ and RQ represent content at the queues at the end of a wireless frame. In the first two frames, Fr1 and Fr2, the TQ and RQ have the preferred status, i.e. the TQ is empty and the RQ is full.

The solid arrows of the wireless interface WI represent successful transmission of wireless data packets, and white arrows represent empty wireless data packet transmissions. An empty wireless packet transmission means one without audio data block or one with redundant transmission of same audio data block, but with unchanged transmission sequence number. In frames Fr3, Fr4 and Fr5, the shaded arrows represent wireless data packet transmission errors. In frame Fr5 the TQ is nearly full and the RQ is nearly empty. In the frames Fr6, Fr7 and Fr8, both wireless transmissions are successful, and the preferred status of TQ and RQ are regained. In frames Fr9, Fr10 and Fr11 the wireless transmissions are error free and the TQ and RQ have their preferred status.

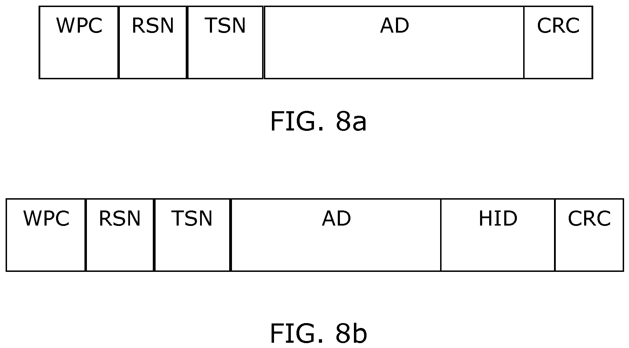

FIGs. 8a and 8b illustrate examples of the wireless data to be transmitted. FIG. 8a shows an example of a layout of wireless packets for use to transmit audio data AD only. It contains a field WPC with management of wireless protocol (MAC-layer protocol control). Especially, this field WPC may carry: synchronization information, addressing, sequence numbering, acknowledgements, interference and frequency management information, antenna control, and binding and connection control commands. The MAC layer signaling does not affect the application payload bandwidth. Further, a receiver sequence number RSN is included for acknowledgement in opposite direction. A transmit sequence number TSN indicates the number on the audio data block currently being sent. A field contains the audio data AD, and a CRC field is included to allow checking the integrity of a received packet. FIG. 8b is identical with the example of FIG. 8a except that a field with un-buffered low latency HID data is included.

In a specific embodiment, the MAC/PHY is designed based on the following features:
- Frequency range: 2.402 - 2.480 GHz
- Modulation: 2 Mbit/s, GFSK
- Data integrity check: CRC-24
- Encryption of payload data by AES128, CCM with addition of 32 bit MIC (configurable). The same (shared) security key is used for all FP, PP devices in a network.
- Antenna diversity, 2 antennas in both FP and PP.
- Interference scanning in both FP and PP, and interference avoidance procedures using automatic frequency (re)selection for dual slot transmission on two RF bearer frequencies. RF bearer frequency handover is preferably implemented to avoid interference, and this is preferably done seamless and does not interrupt the flow of application data.
- Reliable application data transfer by configurable retransmission, both downlink and uplink. The retransmission procedure uses both active carriers and can be combined with redundant transmission.
- MAC layer signaling field carries: synchronization information, addressing, sequence numbering, acknowledgements, interference and frequency management information, antenna control, and binding and connection control commands. The MAC layer signaling does not affect the application payload bandwidth.
- The FP always transmits at least a synchronization beacon when no portable devices are active.

The following are preferred features:
- Automatic retransmission request.
- 1-bit transmit and receive sequence number are used for acknowledgement transmission (and retransmission).
- Receiver (e.g. PP) can respond with either acknowledgement ACK or non-acknowledgement NACK - or the ACK/NACK can get lost.
- Acknowledgement ACK is signaled with receiver sequence number different from the transmitted sequence number.
- Non-acknowledgement NACK is signaled with receiver sequence number equal to the transmitted sequence number.
- For the retransmission method, the normal and desired state is that the RQ is full, and the TQ is empty (for minimum latency).
- Typical configuration: audio data block size of 2 ms (e.g. 96 samples), a wireless frame length of 2 ms, and wireless transmission every 1 ms, TQ and RQ each with space for 4 blocks in each, allowing up to 7 retransmission before data loss, resulting in total system latency of 8 ms.
- Retransmission scheme can also be employed for duplex audio connections.
- In the special situation where acknowledgements are all lost and RQ runs empty, the transmitter (e.g. FP) continues to output packets using the dualslot method (unacknowledged redundant transmission) - improved handling of asymmetric link budget.
- Wireless packets may additionally contain both retransmitted audio data and most recent user state data (un-retransmitted HID data).
- Point-to-multipoint, where some device are using retransmitted (audio) payload and others are not retransmitting (HID) payload.

To sum up, the invention provides a method for wireless RF transmission of short audio data blocks, e.g. 0.5 ms to 2 ms blocks, with low latency. The method involves a fixed part (FP) serving as synchronization master, and one or more portable parts (PP) being synchronization slaves in a time division scheme with fixed transmission intervals, and with a fixed and limited payload capacity of the RF transmission channel, such as 1.5-3 times the capacity required to transmit the audio data blocks in real-time. Short length transmission and receiving queues (TQ, RQ), e.g. having each 2-8 spaces for audio data blocks, for the audio data blocks are used to allow retransmission of blocks in response to a missing acknowledge response from the portable part (PP). The queuing is operated so as to result in a fixed latency determined e.g. by the transmission and receiving queue (TQ, RQ) lengths. A two-way audio scheme can be implemented following the same principle and utilizing the same RF transmission principles. The method provides a roboust and low latency wireless audio interface suitable for dedicated audio devices and/or combined audio and Human Interface Devices (HIDs), e.g. for gaming equipment.

Although the present invention has been described in connection with the specified embodiments, it should not be construed as being in any way limited to the presented examples. The scope of the present invention is to be interpreted in the light of the accompanying claim set. In the context of the claims, the terms "including" or "includes" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method for transmission of a digital audio signal (D_I) divided into digital audio data blocks of a fixed length, between a fixed part (FP) being a timing master and one or more portable parts (PP) being timing slaves on a wireless RF transmission channel according to a time division multiplexing or time division duplexing scheme with a fixed transmission time interval, wherein a raw payload bandwidth of the wireless RF transmission channel is a fixed factor larger, than a bandwidth required to transmit the audio data blocks, wherein the wireless RF transmission comprises a fixed wireless frame length, each wireless frame containing one or more time slots, the method comprising:
1) receiving (R_AB) an audio data block at the fixed part (FP),
2) queuing (TQ_AB) the audio data block at an empty space in a fixed length FIFO type transmitter queue (TQ) having a plurality of spaces for audio data blocks,
3) transmitting (T_WP) a wireless data packet (WP) containing an audio data block from an output end of the transmitter queue (TQ) from the fixed part (FP) to the portable part (PP) on the wireless RF transmission channel,
4) receiving (R_WP) the wireless data packet (WP) by the portable part (PP),
5) queuing (RQ_AB) the audio data block received in the wireless data packet (WP) at an empty space in an input end of a fixed length FIFO type receiver queue (RQ) having a plurality of spaces for audio data blocks,
6) transmitting (T_ACK) an acknowledgement message (ACK) from the portable part (PP) to the fixed part (FP) on the RF transmission channel in response to the received audio data block, and
7) outputting (O_AB) an audio data block from an output end of the receiver queue (RQ),
wherein the steps 1)-7) are performed in time synchronization so as to provide a fixed latency between step 1) and step 7),
wherein the fixed part (FP) is arranged to retransmit an audio data block from the transmitter queue (TQ) in a subsequent wireless data packet in case no acknowledgement message (ACK) has been received for transmission of that audio data block, and
wherein an audio data block is deleted from the transmitter queue (TQ) in response to the fixed part (FP) receiving the acknowledgement message (ACK) for successful transmission of that audio data block.

2. The method according to claim 1, wherein the fixed length of the transmitter queue (TQ) is equal to the fixed length of the receiver queue (RQ), and wherein this fixed length is 2-8.

3. The method according to any of the preceding claims, wherein the fixed length of the audio data blocks is selected to be within 0.2 ms to 8 ms.

4. The method according to any of the preceding claims, wherein the fixed length of the wireless frame is selected to be within 0.2 ms to 20 ms.

5. The method according to any of the preceding claims, wherein the fixed length of the transmitter queue (TQ) is 2-8, wherein the fixed length of the receiver queue (RQ) is equal to the fixed length of the transmitter queue (TQ), wherein the fixed length of the audio data blocks is selected to be within 0.2 ms to 8 ms, wherein the fixed length of the wireless frame is selected to be within 0.2 ms to 20 ms, and wherein the fixed transmission time interval is selected to be within 0.2 ms to 10 ms.

6. The method according to any of the preceding claims, comprising retransmitting one queued audio data block from the fixed part (FP) a plurality of times.

7. The method according to any of the preceding claims, comprising
- receiving Human Interface Device data at the portable part (PP),
- transmitting a Human Interface Device data block in a wireless frame also containing an audio data block on the wireless RF transmission channel from the portable part (PP) to the fixed part (FP), and
- outputting a Human Interface Device data block received at the fixed part (FP).

8. The method according to claim 7, wherein said Human Interface Device data block is transmitted un-queued at the portable part (PP) and output un-queued at the fixed part (FP).

9. The method according to any of the preceding claims, comprising duplex audio data block transmission between the fixed part (FP) and the portable part (PP).

10. The method according to claim 9, wherein the portable part (PP) is arranged to transmit audio data blocks to the fixed part (FP) on said RF transmission channel.

11. The method according to any of the preceding claims, wherein the wireless frame comprises at least one time slot for downlink data, and one or more time slots for uplink data.

12. The method according to claim 1, comprising transmitting, in one wireless frame, one audio data block on two different RF bearer frequencies (F1, F2) from the fixed part (FP) to the one or more portable parts (PP).

13. A wireless RF transmitter comprising at least one RF transmitter circuit connected to an antenna, and being arranged to operate as the fixed part (FP) according to the method according to any of claims 1-12.

14. A wireless RF receiver comprising at least one RF receiver circuit connected to an antenna, and being arranged to operate as the portable part (PP) according to the method according to any of claims 1-12.

15. A system comprising at least one of: the wireless RF transmitter according to claim 13 and one or more wireless RF receivers according to claim 14, wherein the system is one of: a wireless headset, a wireless mouse, a wireless gaming controller, a wireless keyboard, a wireless microphone, a wireless loudspeaker, a wireless intercom system, a video system, and a Virtual Reality system.
